Europäisches Patentamt

European Patent Office

Office européen des brevets

(19)

(11) Veröffentlichungsnummer: **0 208 285 B1**

(12) # EUROPÄISCHE PATENTSCHRIFT

(45) Veröffentlichungstag der Patentschrift: **07.04.93**

(51) Int. Cl.⁵: **C08G 77/08**, C08G 77/06

(21) Anmeldenummer: **86109226.0**

(22) Anmeldetag: **07.07.86**

Die Akte enthält technische Angaben, die nach dem Eingang der Anmeldung eingereicht wurden und die nicht in dieser Patentschrift enthalten sind.

(54) **Verfahren zur Herstellung von linearen Organopolysiloxanen mit Triorganosiloxygruppen als endständige Einheiten.**

(30) Priorität: **09.07.85 DE 3524484**

(43) Veröffentlichungstag der Anmeldung:
**14.01.87 Patentblatt 87/03**

(45) Bekanntmachung des Hinweises auf die
Patenterteilung:
**07.04.93 Patentblatt 93/14**

(84) Benannte Vertragsstaaten:
**BE DE FR GB IT NL**

(56) Entgegenhaltungen:
**DE-B- 2 229 514**
**DE-B- 2 313 218**
**DE-B- 2 423 531**
**DE-B- 2 524 041**
**US-A- 4 563 513**

(73) Patentinhaber: **WACKER-CHEMIE GMBH**
**Hanns-Seidel-Platz 4**
**W-8000 München 83(DE)**

(72) Erfinder: **Burkhardt, Jürgen, Dr. Dipl.-Chem.**
**Isenbreite 25**
**W-8261 Winhöring(DE)**

## Beschreibung

Verfahren zur Herstellung von linearen Organopolysiloxanen mit Triorganosiloxygruppen als endständigen Einheiten aus linearem, in den endständigen Einheiten je eine Si-gebundene Hydroxylgruppe enthaltendem Organopolysiloxan und Siliciumverbindung mit zwei Triorganosilylgruppen je Molekül, wobei als Katalysator Phosphornitridchlorid verwendet wird, sind bereits bekannt. Hierzu sei beispielsweise auf US 4 203 913, ausgegeben 20. Mai 1980, J. Burkhardt et al., Wacker-Chemie GmbH, verwiesen.

Aufgabe der Erfindung ist, ein Verfahren zur Herstellung von linearen Organopolysiloxanen mit Triorganosiloxygruppen als endständigen Einheiten aus linearem, in den endständigen Einheiten je eine Si-gebundene Hydroxylgruppe enthaltendem Organopolysiloxan und Siliciumverbindung mit zwei Triorganosilylgruppen je Molekül, wobei als Katalysator Phosphornitridchlorid verwendet wird, bereitzustellen, bei dem bei gleicher Verweilzeit der Reaktionsteilnehmer im Reaktionsgefäß und Erzielung von linearen Organopolysiloxanen mit Triorganosiloxygruppen als endständigen Einheiten gleicher Qualität weniger Phosphornitridchlorid als bisher benötigt wird und kein zusätzliches Mittel zum Unwirksam-Machen von Phosphornitridchlorid bzw. dessen die Kondensation und/oder Äquilibrierung von Organopolysiloxanen fördernden Umsetzungsprodukten mit Organopolysiloxanen erforderlich ist.

Weiterhin ist Aufgabe der Erfindung, ein Verfahren zur Herstellung von linearen Organopolysiloxanen mit Triorganosiloxygruppen als endständigen Einheiten aus linearen, in den endständigen Einheiten je eine Si-gebundene Hydroxylgruppe enthaltendem Organopolysiloxan und Siliciumverbindung mit zwei Triorganosilylgruppen je Molekül, wobei als Katalysator Phosphornitridchlorid verwendet wird, bereitzustellen, das besonders hohe Raum-Zeit-Ausbeuten und in besonders hohem Ausmaß physiologisch unbedenkliches lineares Organopolysiloxan mit besonders wenig Si-gebundenen Hydroxylgruppen, mit besonders hoher Wärmebeständigkeit und besonders geringer elektrischer Leitfähigkeit liefert, wobei dieses Organopolysiloxan beim Lagern nicht trübe wird und keine Verfärbung erleidet und metallische Oberflächen nicht korrodiert. Auch diese Aufgabe wird durch die Erfindung gelöst.

Gegenstand der Erfindung ist ein Verfahren zur Herstellung von linearen Organopolysiloxanen mit Triorganosiloxygruppen als endständigen Einheiten aus linearem, in den endständigen Einheiten je eine Si-gebundene Hydroxylgruppe enthaltendem Organopolysiloxan und Siliciumverbindung mit zwei Triorganosilylgruppen je Molekül, wobei als Katalysator Phosphornitridchlorid verwendet wird, dadurch gekennzeichnet, daß in den endständigen Einheiten je eine si-gebundene Hydroxylgruppe enthaltendes, lineares Organopolysiloxan in Gegenwart von 1 bis 40 Gew.-ppm Phosphornitridchlorid, bezogen auf das Gewicht der jeweils eingesetzten Menge an Organopolysiloxan, zu Organopolysiloxan mit einer durchschnittlichen Viskosität von $1.10^3$ bis $5.10^7$ mPa.s bei 25°C kondensiert wird und das so erhaltene Organopolysiloxan anschließend mit Hexaorganodisilazan in Mengen von 0,05 bis 1 Gewichtsprozent, ebenfalls bezogen auf das Gewicht der jeweils eingesetzten Menge an Organopolysiloxan, umgesetzt wird, wobei die Umsetzung mit Hexaorganodisilazan in Abwesenheit von Füllstoffen mit einer BET-Oberfläche von mindestens 50 $m^2$/g in Mengen, welche 1 Gewichtsprozent, bezogen auf das Gewicht der jeweils eingesetzten Menge an Organopolysiloxan, übersteigen, erfolgt.

Aus US 4,008,198, ausgegeben 15. Februar 1977, H. Krohberger et al., Wacker-Chemie GmbH, war nicht zu entnehmen, daß die Zugabe von Hexaorganodisilazan zu linearem Organopolysiloxan mit endständigen Hydroxylgruppen in den erfindungsgemäßen niedrigen Mengen und in Abwesenheit von wesentlichen Mengen an Füllstoffen mit einer Oberfläche von mindestens 50 $m^2$/g Vorteile erbringen würde.

Bei dem erfindungsgemäßen Verfahren können beliebige, lineare, in den endständigen Einheiten je eine Si-gebundene Hydroxylgruppe enthaltende Organopolysiloxane eingesetzt werden, deren Viskosität auch bisher durch Kondensation in Gegenwart von Phosphornitridchlorid als Katalysator erhöht werden konnte. Beispiele für derartige Organopolysiloxane sind insbesondere solche der Formel

$$HO(SiR_2O)_mH .$$

In dieser Formel bedeutet R gleiche oder verschiedene, einwertige, gegebenenfalls halogenierte Kohlenwasserstoffreste oder Wasserstoff mit der Maßgabe, daß an jedes Siliciumatom, an das Wasserstoff unmittelbar gebunden ist, auch ein Kohlenwasserstoffrest gebunden ist, und m eine ganze Zahl im Wert von mindestens 2. Vorzugsweise hat m einen solchen Wert, daß die durchschnittliche Viskosität des Organopolysiloxans, bevor es mit Phosphornitridchlorid vermischt wird, höchstens 500 $mm^2$.$s^{-1}$ bei 25°C beträgt.

Obwohl durch die obige, häufig verwendete Formel nicht dargestellt, können bis zu insgesamt 5 Molprozent der Einheiten der Formel $SiR_2O$ durch andere, meist jedoch lediglich als mehr oder weniger schwer vermeidbare Verunreinigungen vorliegende Siloxaneinheiten, wie solche der Formel $RSiO_{3/2}$, $R_3SiO_{1/2}$, wobei R jeweils die oben dafür angegebene Bedeutung hat oder $SiO_{4/2}$ oder Gemische aus mindestens zwei solcher Einheiten ersetzt sein.

Vorzugsweise enthalten die Reste R in der oben angegebenen Formel höchstens 1 bis 18 Kohlenstoffatom(e) je Rest. Beispiele für Kohlenwasserstoffreste R und damit für organische Reste in den bei dem erfindungsgemäßen Verfahren einsetzbaren Organopolysiloxanen sind Alkylreste, wie der Methyl-, Ethyl-, n-Propyl-, Isopropyl, n-Butyl- und sec.-Butylrest sowie Octadecylreste; aliphatische Reste mit Kohlenstoff-Kohlenstoff-Doppelbindung, wie der Vinyl- und Allylrest; Arylreste, wie der Phenylrest und Xenylreste; Alkarylreste, wie Tolylreste; und Aralkylreste, wie der Benzylrest.

Beispiele für halogenierte Kohlenwasserstoffreste R und damit ebenfalls für organische Reste in den bei dem erfindungsgemäßen Verfahren einsetzbaren Organopolysiloxanen sind Halogenalkylreste, wie der 3,3,3-Trifluorpropylrest, und Halogenarylreste, wie o-, p- und m-Chlorphenylreste.

Das erfindungsgemäße Verfahren dürfte jedoch die größte Bedeutung für den Einsatz von solchen, in den endständigen Einheiten je eine Si-gebundene Hydroxylgruppe enthaltenden Organopolysiloxanen haben, die Diorganopolysiloxane sind, worin alle organischen Reste Methylgruppen sind.

Die gewünschte durchschnittliche Viskosität der in den endständigen Einheiten je eine Si-gebundene Hydroxylgruppe enthaltenden Organopolysiloxane, nach deren Erreichen diese Organopolysiloxane mit Hexaorganodisilazan umgesetzt werden, beträgt $1.10^3$ bis $5.10^7$ mPa.s bei 25°C.

Bei den Phosphornitridchloriden, in deren Gegenwart die gewünschte Viskosität der erfindungsgemäß mit Hexaorganodisilazan umzusetzenden Organopolysiloxane erreicht wird und welche die mit Hexaorganodisilazan umzusetzenden Organopolysiloxane noch enthalten, kann es sich um beliebige Phosphornitridchloride handeln, mit denen auch bisher die Kondensation von linearen, in den endständigen Einheiten je eine Si-gebundene Hydroxylgruppe enthaltenden Organopolysiloxanen gefördert werden konnte. Es können z.B. solche sein, die durch Umsetzung von 400 Gewichtsteilen Phosphorpentachlorid mit 130 Gewichtsteilen Ammoniumchlorid hergestellt wurden (vgl. z.B. "Berichte der Deutschen Chemischen Gesellschaft", 57. Jahrgang 1924, Seite 1345), oder solche sein, die durch Umsetzung von 2 Mol Phosphorpentachlorid mit 1 Mol Ammoniumchlorid erhältlich sind (vgl. z.B. US 3 839 388, ausgegeben 1. Oktober 1974, S. Nietzsche et al., Wacker-Chemie GmbH). Selbstverständlich können auch Gemische aus mindestens zwei verschiedenen Arten von Phosphornitridchloriden verwendet werden.

Phosphornitridchlorid wird in Mengen von 1 bis 40 Gewichts-ppm, insbesondere 5 bis 20 Gewichts-ppm, jeweils bezogen auf das Gewicht der jeweils eingesetzten Menge an linearem, in den endständigen Einheiten je eine Si-gebundene Hydroxylgruppe enthaltendem Organopolysiloxan, verwendet.

Die Kondensation vom linearen, in den endständigen Einheiten je eine Si-gebundene Hydroxylgruppe aufweisendem Organopolysiloxan wird vorzugsweise bei 100 bis 200 °C durchgeführt.

Um die Abführung des bei der Kondensation gebildeten Wassers zu erleichtern, wird die Kondensation vom linearen, in den endständigen Einheiten je eine Si-gebundene Hydroxylgruppe aufweisendem Organopolysiloxan vorzugsweise bei einem Druck unterhalb 800 hPa (abs.) durchgeführt. Diese Kondensation ist aber auch bei höheren Drücken durchführbar.

Die Zeit zwischen Zugabe vom Phosphornitridchlorid zum linearen, in den endständigen Einheiten je eine Si-gebundene Hydroxylgruppe enthaltendem Organopolysiloxan und Zugabe vom Hexaorganodisilazan beträgt vorzugsweise 2 bis 20 Minuten, insbesondere 5 bis 10 Minuten.

Das bei dem erfindungsgemäßen Verfahren eingesetzte Hexaorganodisilazan ist vorzugsweise solches der Formel

$$[R^1_3 \, Si]_2 NH \, ,$$

wobei $R^1$ gleiche oder verschiedene, einwertige, gegebenenfalls halogenierte Kohlenwasserstoffreste bedeutet. Vorzugsweise enthalten auch die Reste $R^1$ höchstens 1 bis 18 Kohlenstoffatom(e) je Rest. Alle Beispiele für organische Reste R gelten auch für die Reste $R^1$.

Besonders bevorzugt als Hexaorganodisilazan ist 1,3-Divinyl-1,1,3,3-tetramethyldisilazan. Ein wichtiges bei dem erfindungsgemäßen Verfahren einsetzbares Hexaorganodisilazan ist auch Hexamethyldisilazan.

Vorzugsweise wird Hexaorganodisilazan in Mengen von 0,1 bis 0,5 Gewichtsprozent, bezogen auf das Gewicht der jeweils eingesetzten Menge an Diorganopolysiloxan, verwendet.

Die Umsetzung vom Hexaorganodisilazan mit dem linearen, in den endständigen Einheiten je eine Si-gebundene Hydroxylgruppe aufweisendem Organopolysiloxan findet beim Vermischen der beiden vorstehend genannten Reaktionsteilnehmer miteinander bzw. nach diesem Vermischen statt. Dabei kann sich das Organopolysiloxan bei der Temperatur oder etwa der Temperatur befinden, bei der es die gewünschte Viskosität erreicht hat. Der bei der Umsetzung von Si-gebundenen Hydroxylgruppen mit Hexaorganodisilazan zu Triorganosiloxygruppen gebildete Ammoniak macht den Katalysator unwirksam.

Das erfindungsgemäße Verfahren kann absatzweise oder kontinuierlich durchgeführt werden. Vorzugsweise wird es kontinuierlich durchgeführt.

Vorzugsweise wird das Hexaorganodisilazan dem in den endständigen Einheiten je eine Si-gebundene Hydroxylgruppe enthaltendem, linearen Organopolysiloxan, nachdem es die gewünschte durchschnittliche Viskosität erreicht hat, erst nach dem Entnehmen dieses Organopolysiloxans aus dem Gefäß, in dem die Kondensation der Si-gebundenen Hydroxylgruppen miteinander stattfand, zugesetzt.

Die erfindungsgemäß hergestellten linearen Organopolysiloxane mit Triorganosiloxygruppen als endständigen Einheiten können für alle Zwecke verwendet werden, bei denen auch die nach den bisher bekannten Verfahren hergestellten linearen Organopolysiloxane mit Triorganosiloxygruppen als endständigen Einheiten eingesetzt werden konnten, z.B. als Fadengleitmittel, zur Herstellung von Organopolysiloxanelastomeren, die durch Radikalbildner oder durch Anlagerung von SiC-gebundenen Vinylgruppen an Si-gebundenen Wasserstoff vernetzt sind, und zur Herstellung von klebrige Stoffe abweisenden Überzügen.

Das in den folgenden Beispielen verwendete Phosphornitridchlorid wurde hergestellt wie folgt: Ein Gemisch aus 417 g (2 Mol) Phosphorpentachlorid und 53,5 g (1 Mol) Ammoniumchlorid in 1000 ml Tetrachlorethan wird 12 Stunden zum Sieden unter Rückfluß erwärmt. Aus der so erhaltenen, hellgelben Lösung werden bei 160°C und unter Erniedrigung des Drucks bis auf etwa 1,33 hPa (abs.) die flüchtigen Anteile entfernt. Als Rückstand verbleiben gelbliche Kristalle, die im wesentlichen aus der Verbindung der Formel

$$Cl_3PNPCl_2NPCl_3 .PCl_6$$

bestehen.

Beispiel 1

a) In einen Doppelschneckenkneter mit einer bei 150°C und 6,7 hPa (abs.) gehaltenen 140 cm langen Reaktionszone werden kontinuierlich 300 l je Stunde eines in den endständigen Einheiten je eine Si-gebundene Hydroxylgruppe enthaltenden Dimethylpolysiloxans mit einer Viskosität von 140 mm$^2$ .s$^{-1}$ bei 25°C und 5 Gewichts-ppm (bezogen auf das Gewicht des Dimethylpolysiloxans) je Stunde des Phosphornitridchlorids in Form einer 0,5 gewichtsprozentigen Lösung in Methylenchlorid eingespeist.

b) Mittels einer Zahnradpumpe wird im Austragsrohr das so erhaltene Organopolysiloxan, das noch eine Temperatur von fast 150°C aufweist, mit 0,2 Gewichtsprozent, bezogen auf das Gewicht des Dimethylpolysiloxans, je Stunde 1,3-Divinyl-1,1,3,3-tetramethyldisilazan vermischt. Nach 24 Stunden sind in dem so erhaltenen, Dimethylpolysiloxan mit Vinyldimethylsiloxygruppen als endständigen Einheiten und einem im Brabender-Plastograph bei 25°C und 60 Umdrehungen je Minute bestimmten Wert von 4500 Nm keine Si-gebundenen Hydroxylgruppen vorhanden, was sich durch Ausbleiben einer Elastomer-Bildung nach Vermischen einer Probe mit 1 Gewichtsprozent, bezogen auf das Gewicht der Probe, einer Mischung aus gleichen Gewichtsteilen Tetra-(methoxyethylenoxy)-silikat und Di-n-butylzinndilaurat und Stehenlassen des so erhaltenen Gemisches über Nacht bei Raumtemperatur ergibt.

Beispiel 2

Die in Beispiel 1 beschriebene Arbeitsweise wird wiederholt mit der Abänderung, daß 7 Gewichts-ppm (bezogen auf das Gewicht des Dimethylpolysiloxans) je Stunde des Phosphornitridchlorids in Form der 0,5 gewichtsprozentigen Lösung in Methylenchlorid an Stelle der 5 Gewichts-ppm des Phosphornitridchlorids eingesetzt werden.

Das so erhaltene Dimethylpolysiloxan mit Vinyldimethylsiloxygruppen als endständigen Einheiten hat einen im Brabender-Plastograph bei 25°C und 60 Umdrehungen je Minute bestimmten Wert von 6500 Nm und ist aufgrund der in Beispiel 1 unter b) beschriebenen Prüfung ebenfalls frei von Si-gebundenen Hydroxylgruppen.

Vergleichsversuch a)

a) Die in Beispiel 1 unter a) beschriebene Arbeitsweise wird wiederholt mit den Abänderungen, daß anstelle der 300 l je Stunde nur 200 l je Stunde des in den endständigen Einheiten je eine Si-gebundene Hydroxylgruppe aufweisenden Dimethylpolysiloxans, 25 Gewichts-ppm (bezogen auf das Gewicht des Dimethylpolysiloxans mit Si-gebundenen Hydroxylgruppen) je Stunde des Phosphornitridchlorids in Form der 0,5 gewichtsprozentigen Lösung in Methylenchlorid anstelle der 5 Gewichts-ppm des Phosphornitridchlorids

und zusätzlich 3 l je Stunde Vinyldimethylsiloxygruppen als endständige Einheiten aufweisendes Dimethylpolysiloxan mit einer Viskosität von 135 mm$^2$ .s$^{-1}$ bei 25°C

in den Kneter eingespeist werden.

b) Mittels einer Zahnradpumpe wird im Austragsrohr das so erhaltene Organopolysiloxan, das nooh eine Temperatur von fast 150°C aufweist, mit 150 Gewichts-ppm, bezogen auf das Gewicht dieses Organopolysiloxans je Stunde tert.-Octylamin vermischt.

In dem so erhaltenen Dimethylpolysiloxan mit einem im Brabender-Plastograph bei 25°C und 60 Umdrehungen je Minute bestimmten Wert von 4800 Nm sind nicht alle Si-gebundenen Hydroxylgruppen durch Vinyldimethylsiloxygruppen ersetzt, was sich durch Elastomerbildung bei der in Beispiel 1 unter b) beschriebenen Prüfung ergibt.

Vergleichsversuch b)

Die in Vergleichsversuch unter a) angegebene Arbeitweise wird wiederholt mit der Abänderung, daß nur 2 l je Stunde Vinyldimethylsiloxygruppen als endständige Einheiten aufweisendes Dimethylpolysiloxan anstelle der 3 l je Stunde dieses Polysiloxans eingesetzt werden.

In dem so erhaltenen Dimethylpolysiloxan mit einem im Brabender-Plastograph bei 25°C und 60 Umdrehungen je Minute bestimmten Wert von 6200 Nm sind nicht alle Si-gebundenen Hydroxygruppen durch Vinyldimethylsiloxygruppen ersetzt, was sich durch Elastomerbildung bei der in Beispiel 1 unter b) beschriebenen Prüfung ergibt.

**Patentansprüche**

1. Verfahren zur Herstellung von linearen Organopolysiloxanen mit Triorganosiloxygruppen als endständige Einheiten aus linearem, in den endständigen Einheiten je eine Si-gebundene Hydroxylgruppe enthaltendem Organopolysiloxan und Siliciumverbindung mit zwei Triorganosilylgruppen je Molekül, wobei als Katalysator Phosphornitridchlorid verwendet wird, **dadurch gekennzeichnet,** daß in den endständigen Einheiten je eine Si-gebundene Hydroxylgruppe enthaltendes, lineares Organopolysiloxan in Gegenwart von 1 bis 40 Gew.-ppm Phosphornitridchlorid, bezogen auf das Gewicht der jeweils eingesetzten Menge an Organopolysiloxan, zu Organopolysiloxan mit einer durchschnittlichen Viskosität von $1.10^{-3}$ bis $5.10^7$ mPa.s bei 25°C kondensiert wird und
das so erhaltene Organopolysiloxan anschließend mit Hexaorganodisilazan in Mengen von 0,05 bis 1 Gewichtsprozent, ebenfalls bezogen auf das Gewicht der jeweils eingesetzten Menge an Organopolysiloxan, umgesetzt wird, wobei die Umsetzung mit Hexaorganodisilazan in Abwesenheit von Füllstoffen mit einer BET-Oberfläche von mindestens 50 $m^2/g$ in Mengen, welche 1 Gewichtsprozent, bezogen auf das Gewicht der jeweils eingesetzten Menge an Organopolysiloxan, übersteigen, erfolgt.

2. Verfahren nach Anspruch 1, **dadurch gekennzeichnet,** daß als Hexaorganodisilazan 1,3-Divinyl-1,1,3,3-tetramethyl-disilazan verwendet wird.

**Claims**

1. Process for the preparation of linear organopolysiloxanes having triorganosiloxy groups as terminal units, from a linear organopolysiloxane containing an Si-bonded hydroxyl group in each of the terminal units and a silicon compound having two triorganosilyl groups per molecule, phosphonitrile chloride being used as the catalyst, characterised in that a linear organopolysiloxane containing an Si-bonded hydroxyl group in each of the terminal units is subjected to a condensation reaction in the presence of 1 to 40 ppm by weight of phosphonitrile chloride, based on the weight of the particular amount of organopolysiloxane employed, to give an organopolysiloxane having an average viscosity of $1x10^3$ to $5x10^7$ mPa.s at 25°C, and the organopolysiloxane thus obtained is then reacted with a hexaorganodisilazane in amounts of 0.05 to 1 per cent by weight, likewise based on the weight of the particular amount of organopolysiloxane employed, the reaction with the hexaorganodisilazane being carried out in the absence of fillers having a BET surface area of at least 50 $m^2/g$ in amounts which exceed 1 per cent by weight, based on the weight of the particular amount of organopolysiloxane employed.

2. Process according to Claim 1, characterised in that 1,3-divinyl-1,1,3,3-tetramethyl-disilazane is used as the hexaorganodisilazane.

**Revendications**

1. Procédé pour préparer des polyorganosiloxanes linéaires comportant des groupes triorganosiloxy en tant que motifs terminaux, à partir d'un polyorganosiloxane linéaire contenant dans chacun de ses motifs terminaux un groupe hydroxyle lié à Si, ainsi que d'un composé du silicium comportant deux groupes triorganosilyle par molécule, procédé utilisant comme catalyseur du chlorure et nitrure de phosphore, caractérisé en ce qu'on condense un polyorganosiloxane linéaire, contenant dans chacun de ses motifs terminaux un groupe hydroxyle lié à Si, en présence de 1 à 40 ppm en poids de chlorure et nitrure de phosphore, par rapport au poids de la quantité utilisée dans chaque cas de polyorganosiloxane, pour obtenir un polyorganosiloxane ayant une viscosité moyenne à 25°C de $1.10^3$ à $5.10^7$ mPa.s, puis qu'on fait réagir le polyorganosiloxane ainsi obtenu avec un hexaorganodisilazane en des quantités de 0,05 à 1 % en poids, ici aussi par rapport au poids de la quantité utilisée dans chaque cas de polyorganosiloxane, la réaction avec l'hexaorganodisilazane étant mise en oeuvre en l'absence de matières de charge ayant une aire spécifique BET d'au moins 50 $m^2$/g en des quantités supérieures à 1 % en poids par rapport au poids de la quantité utilisée dans chaque cas de polyorganosiloxane.

2. Procédé selon la revendication 1, caractérisé en ce qu'on utilise comme hexaorganodisilazane le divinyl-1,3 tétraméthyl-1,1,3,3 disilazane.